# EUROPEAN PATENT SPECIFICATION

(11) **EP 0 281 271 B1**
(45) Date of publication and mention of the grant of the patent: **04.12.1996**
(21) Application number: 88301299.9
(22) Date of filing: 17.02.1988
(51) Int. Cl.: G06T 5/00, G06K 9/48, G06K 11/02

(54) **Image processing method and apparatus**
Bildverarbeitungsverfahren und -gerät
Procédé et appareil de traitement d'image

(30) Priority: 18.02.1987 JP 33344/87
(43) Date of publication of application: 07.09.1988
(73) Proprietor: HITACHI, LTD., Chiyoda-ku, Tokyo 100 (JP)
(72) Inventor: Takenaga, Hiroshi, Hitachi-shi (JP); Okuyama, Yoshiyuki, Hitachi-shi (JP); Kobayashi, Yoshiki, Hitachi-shi (JP); Asada, Kazuyoshi, Hitachi-shi (JP)
(74) Representative: Calderbank, Thomas Roger

(56) References cited:
- GB-A- 2 144 251
- US-A- 4 575 751

## Description

The present invention relates to an image processing apparatus, and in particular to an image processing apparatus suitable for executing the contour tracking of an image at high speed.

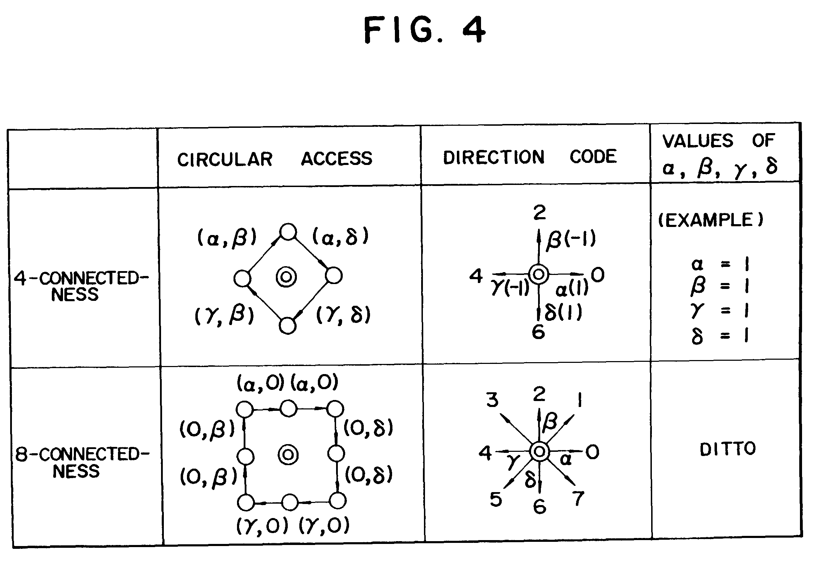

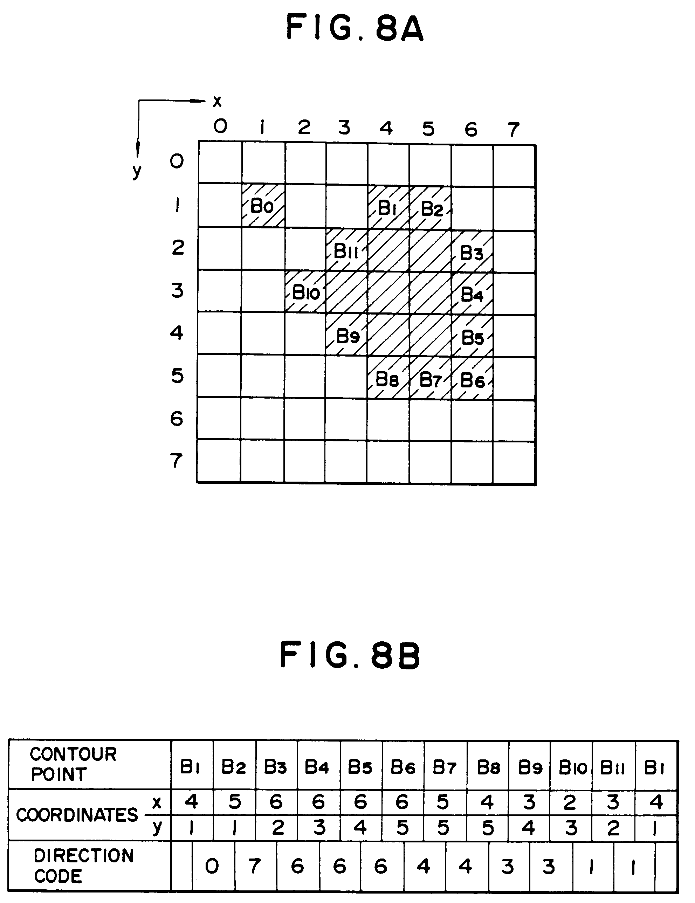

In pattern recognition, one of basic processing steps for extracting features relating to the shape of an object is contour tracking. This contour tracking is processing of tracking the boundary between an object in an inputted image and its background in accordance with a specified connectedness (4- or 8-connectedness). The contour tracking processing will now be described by referring to a binary image shown in Fig. 8A as an example. In Fig. 8A, shaded regions represent the object "1", while other regions represent the background "0". First of all, a start picture element where the tracking is started must be detected. In general, the start picture element is searched from the top leftmost corner (x, y) = (0, 0) in the horizontal direction and from the top to the bottom in the vertical direction until the object is detected. First of all, in the case of Fig. 8A, a picture element B₀ is detected as the object. Since there are no picture elements having value of "1" around B₀, however, the picture element B₀ is removed as the noise. The succeedingly detected object is a picture element B₁. Since there are picture elements having a value of "1" around B₁, the contour tracking processing is then performed. While searching values of neighboring picture elements, picture elements having values of "1" connected to the picture element B₁ and forming boundaries with respect to the background are tracked with 8-connectedness in the clockwise direction, for example. As a result, a sequence is extracted as the contour as follows: B₁ → B₂ → B₃ → B₄ → B₅ → B₆ → B₇ → B₈ → B₉ → B₁₀ → B₁₁. Accordingly, addresses of the contour picture elements oε address changes of contour picture elements such as B₁ → B₂, B₂ → B₃ and B₃ → B₄ are derived by an octal direction chain code (direction code for short) shown in Fig. 4. This result is shown in Fig. 8B.

Such an apparatus of the prior art was realized by software with a microcomputer and an image memory. Therefore, the computation of a picture element address and the computation for deriving a direction code from a change of contour picture element address, which were needed in gaining access to a neighboring picture element to detect the next contour picture element on the basis of the current contour picture element, were performed by software processing. This obstructed speed increase in contour tracking. In an improvement on this, an address change between a contour picture element and the next picture element or a contour picture element address is derived by using hardware as described in JP-A-61-36879 and JP-A-61-40683. By using this method, the speed of address computation can be increased. However, contour tracking of an object constructed by a line having thickness one was not considered. As preprocessing for deriving the address change between the contour picture element and the next contour picture element by using the hardware, processing of removing noises was necessary. Therefore, an object constructed by a line having thickness one was removed, and hence the contour tracking of a result image of thinning was difficult. Further, the mask for performing the contour tracking had a size of 3 x 3, and it was also difficult to arbitrarily change this size.

GB-A-2144251 discloses an image processing apparatus intended to recognise patterns in the image. The addresses of picture elements are calculated, and the boundaries of pattern segments are traced. This is done by memorising directional changes between adjacent points encountered in tracing.

In accordance with a first aspect of the present invention as it is defined in the appended claims, there is provided an image processing method in which computation processing of an address of a picture element is performed in a picture element address computation section, which address is to be accessed by a system processor with respect to a input image stored in an image memory, and the transition of the picture element address is coded in a direction code computation section;
wherein:
a request for neighbor access of a current contour picture element for detecting a next contour picture element, a request for transition from the current contour picture element address to the next contour picture element address, and a request for transition to a start point in said neighbor access are input from the system processor;
the coding in the direction code computation section is carried out in parallel to said computation processing performed in said picture element address computation section; and
the transition of the picture element address is coded as a direction on a screen.

In accordance with a second aspect of the present invention as it is defined in the appended claims there is provided an image processing apparatus comprising:
a picture element address computation section for computing an address of picture element whereto a system processor should gain access with respect to an input image stored in an image memory; and
a direction code computation section for coding transition of a picture element address supplied from said picture element address computation section as a direction on a screen;
wherein:
the apparatus further includes a computation control section for controlling said picture element address computation section in accordance with a request for neighbor access of a current contour picture element for detecting a next contour picture element, a request for transition from the current contour picture element address to the next contour picture element address, and a request for transition to a start point in said neighbor access, all of said requests being supplied from said system processor.

The present invention may thus provide an image processing apparatus permitting the contour tracking of a result image of thinning and arbitrary setting of the shape of a mask size for the contour tracking which were difficult in conventional image processing apparatuses, and permitting the contour tracking with a simple structure and at high speed.

In a development of the present invention, three modes are established with respect to the image memory address computation as follows, and am image memory address computation section is constituted by adders and registers, the mask size being programmably varied in accordance with a value set in the register.
(1) Trace mode: Transition to the next contour picture element address.
(2) DIRRD mode: Readout of a direction code.
(3) IMACC mode: Computation of neighboring addresses around a contour picture element in accordance with a specified connectedness.

The apparatus may be configured so that the computation of the direction code is also executed in accordance with the modes described in (1) to (3).

An embodiment of the present invention will now be described, by way of example, with reference to the accompanying drawings, in which:

Fig. 1 shows an internal configuration diagram of an embodiment of an image contour tracking apparatus according to the present invention.

Fig. 2 shows a configuration diagram of an image processing system using the image contour tracking apparatus of the embodiment of the present invention.

Fig. 3 shows examples of the operation logic of the embodiment of the image contour tracking apparatus according to the present invention.

Fig. 4 shows the relationship between the transition direction of the picture element address and the direction code.

Fig. 5 shows an example of the configuration of the picture element address computation section including adders and registers in the image contour tracking apparatus.

Figs. 6A and 6B show an example of a circuit of a computation control section disposed in an image contour tracking apparatus and its operation timing chart, respectively.

Fig. 7 shows an example of configuration of a direction code computation section disposed in an image contour tracking apparatus.

Figs. 8A and 8B show an example of input image and derivation of the coordinates of the contour picture element and direction codes therefrom.

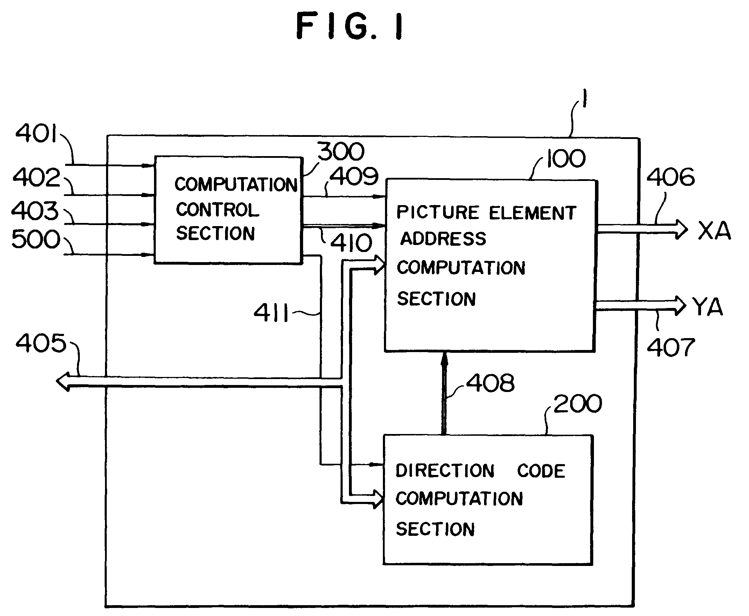

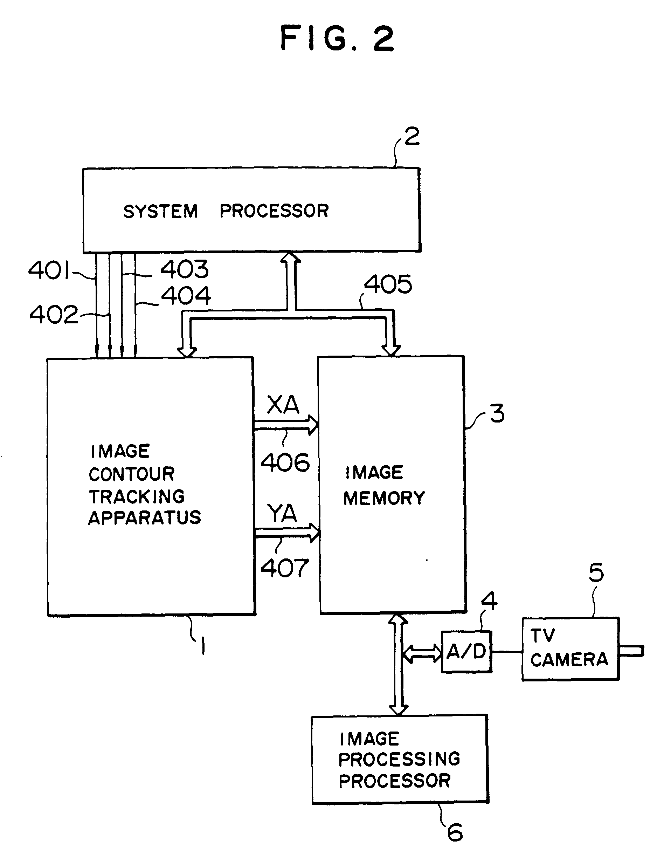

An embodiment of the present invention will hereafter be described by referring to drawings. Fig. 1 shows an image contour tracking apparatus according to the present invention. Fig. 2 shows the configuration of an image processing system using an image contour tracking apparatus according to the present invention.

In Fig. 1, an image contour tracking apparatus 1 includes a picture element address computation section 100 which computes an address whereby a system processor 2 gains access to an image memory storing an input image therein, a direction code computation section 200 which derives a direction code between the current contour picture element and the next contour picture element, and a computation control section 300 which receives request signals 401 to 403 for the above described modes (1) to (3) and controls the picture element address computation section 100 and the direction code computation section 200. The image processing system of Fig. 2 includes a TV camera 5, an A/D converter 4, an image processing processor 6, a system processor 2, an image contour tracking apparatus 1 and an image memory 3.

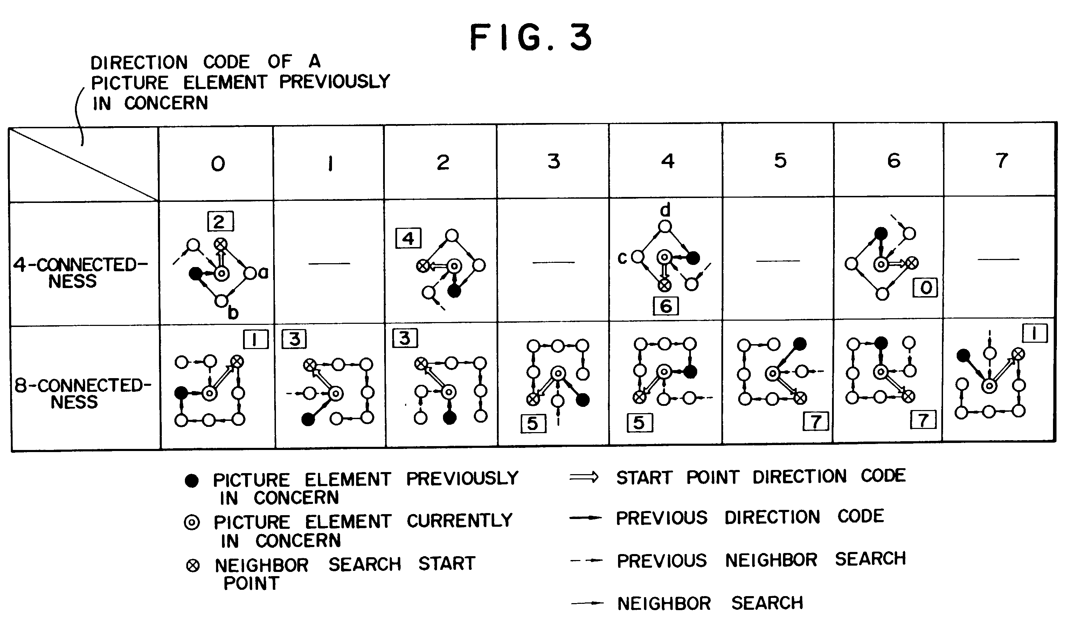

First of all, contour tracking logic using the present image contour tracking apparatus 1 will be described by referring to Fig. 3. Fig. 3 shows transition of picture element address and output direction codes in the case of 4-connectedness and in the case of 8-connectedness. The upper left portion of Fig. 3 indicates that a picture element presently in concern (present contour picture element) ⓞ has been retrieved by neighbor search (access in the IMACC mode of (3)) which is represented by an arrow of broken line and which was performed for a picture element previously in concern (previous contour picture element) ●. It also indicates that the direction code from ● to ⓞ is 0. And then the center is moved from ● to ⓞ. In order to retrieve the next contour picture element, neighbor search (access in the IMACC mode of (3)) is performed by using a picture element ⓧ located counterclockwise by 90 degrees with respect to the previous direction code 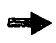 (0 in this case) as the start point of the neighbor search. If the next contour picture element is found, the center is moved from ⓞ to the next contour picture element to repeat the above described operation.

As evident from Fig. 3, the above described Trace mode (1), DIRRD mode (2) and IMACC mode (3) indicate address transitions along the arrows 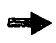 , 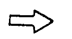 and →, respectively.

Here, the direction code points to the direction shown in Fig. 4. In Fig. 4, address changes in the IMACC mode (circular access mode) are indicated by direction codes α, β, γ and δ in ( ). Therefore, it is understood that all of the address computations of (1) to (3) can be derived by using the direction codes. In the image contour tracking apparatus according to the present invention as well, the address is computed by this method.

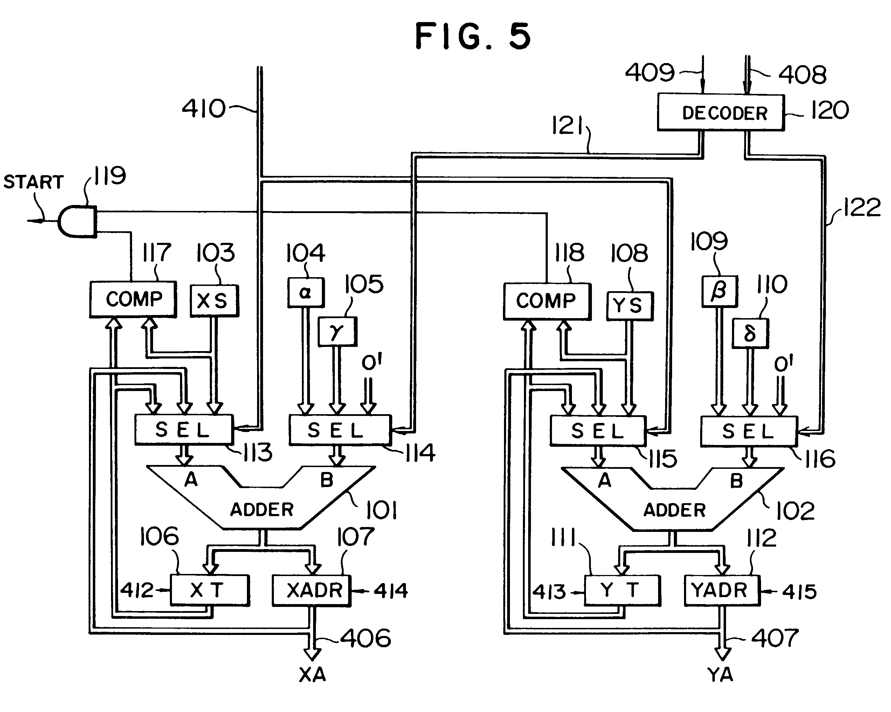

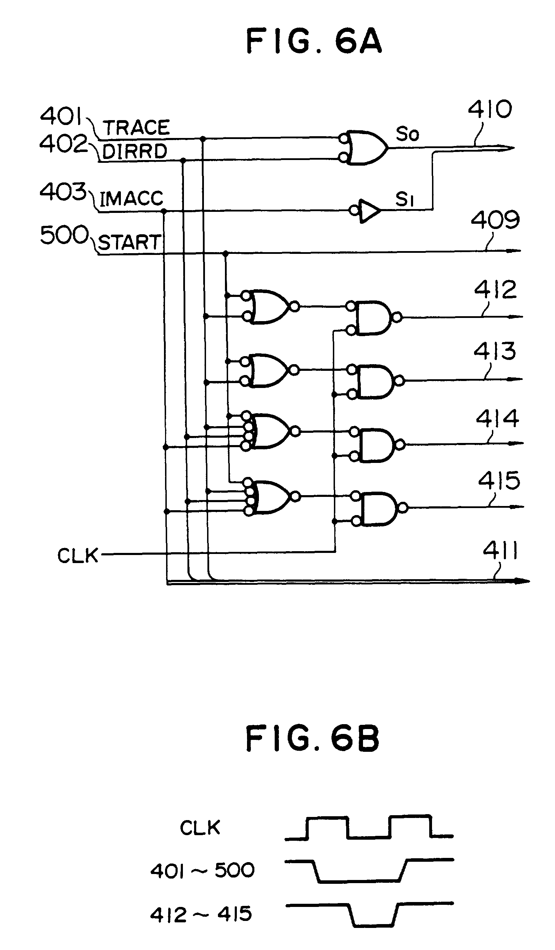

An example of configuration of the picture element address computation section 100 realizing this method is shown in Fig. 5. Fig. 5 is broadly divided into an × address (XA) generation section and a Y address (YA) generation section for the image memory. The picture element address computation section 100 includes adders 101 and 102, contour tracking start address registers XS 103 and YS 108, α-, β-, γ- and δ- registers 104, 105, 109 and 110 for storing the direction codes representing the displacement components in the X and Y directions with respect to the center picture element, an XT register 106 and a YT register 111 for holding coordinates of the current contour picture element, an XADR register 107 and a YADR register 112 for holding the image memory address in the circular access (IMACC mode) , selectors 113 and 115 for selecting outputs of the contour tracking start address registers XS 103 and YS 108, outputs of the registers XT 106 and YT 111 for holding the current contour picture element address, or outputs of the registers XADR 107 and YADR 112 for holding the address in the circular access in accordance with a control signal 410 supplied from the computation control section 300, and for supplying the outputs thus selected to A inputs of the adders 101 and 102, a selector 114 and a selector 116 for selecting the output of the α-register 104, the output of the γ-register 105 or zero and the output of the β-register 109, the output of the δ-register 110 or zero and for supplying the outputs thus selected to B inputs of the adders 101 and 102, respectively, a comparator 117 and a comparator 118 respectively for detecting the coincidence between contents of the XS register 103 and contents of the XT register 106 and the coincidence between contents of the YS register 108 and contents of the YT register 111, an AND circuit 119 for detecting the simultaneous coincidence in the comparator 117 and the comparator 118, and a decoder 120 for controlling the selectors 114 and 116 on the basis of a control signal 409 supplied from the computation control section 300 and a direction code supplied from the direction code computation section 200 via a signal line 408. Although not illustrated in Fig. 5, data from the system processor 2 can be programmably set into the registers XS, YS, α, β, γ and δ. And at least the contents of the registers XT and YT as well as the output START of the AND circuit 119 can be read out. Figs. 6A and 6B show an example of the circuit of the computation control section 300 and its operation timing chart. The computation control section 300 illustrated in Fig. 6A is a circuit for receiving a request of the Trace mode, the DIRRD mode or the IMACC mode from the system processor and for generating control signals 409, 410 and 412 to 415. Control signals S₀ and S₁ supplied via a signal line 410 are signals for controlling the selector 113 and the selector 115 and have logic as listed below.

| S₁ S₀ | Outputs of selectors 113 and 115 |
|---|---|
| 0 0 | XS register, YS register |
| 0 1 | XT register, YT register |
| 1 X | XADR register, YADR register |

Upon the Trace mode request, the computation control section 300 supplies the control signal represented as (S₁, S₀) = (0, 1) via the signal line 410 and supplies write signals for the registers XT, YT, XADR and YADR to the picture element address computation section 100 of Fig. 1 via the signal lines 412 to 415. Upon the DIRRD mode request, the control signal (S₁, S₀) is defined to be (0, 1) so that the registers XT and YT may be selected by the selector 113 and the selector 115. In addition, the write signals 414 and 415 are generated so that the computation results may be set only in the registers XADR and YADR. Upon the IMACC mode request, the control signal (S₁, S₀) is defined to be (1, 0) or (1, 1) so that the registers XADR and YADR may be selected by the selector 113 and the selector 115. (In the above described Table, X of 1 X indicates "1" or "0".) In addition, the write signals 414 and 415 for the registers XADR and YADR are generated. Upon receiving signals 410 and 412 to 415, the picture element address computation section 100 performs computation in the adder 101 and the adder 102 on the contents of the register selected by the selector 113 and the selector 114 and on the coefficients (α, β, γ and δ) selected in accordance with control signals 121 and 122 obtained by decoding the direction code 408 supplied from the direction code computation section 200. The results of the computation are set into the registers XT, YT, XADR and YADR.

In a mode caused by START supplied via a signal line 500, the contour tracking start address XS and YS (set in registers XS and YS) are set into the registers XT, YT, XADR and YADR. In this case, the decoder is so controlled as to make B inputs of the adders 101 and 102 zero.

The coefficient registers α, β, γ and δ are registers for storing therein changes of the picture address in directions, 0, 2, 4 and 6 as shown in Fig. 4. By setting the values shown in Fig. 4, i.e., α = 1, β = -1, γ = -1 and δ = 1 into registers of α, β, γ and δ, for example, contour tracking using a mask of 3 x 3 can be realized. By changing these values, coarse contour tracking with a mask having an arbitrary shape (5 x 5, 3 x 5 or 3 x 7, for example) can be realized. In a uniform pattern, the speed of the contour tracking can be increased.

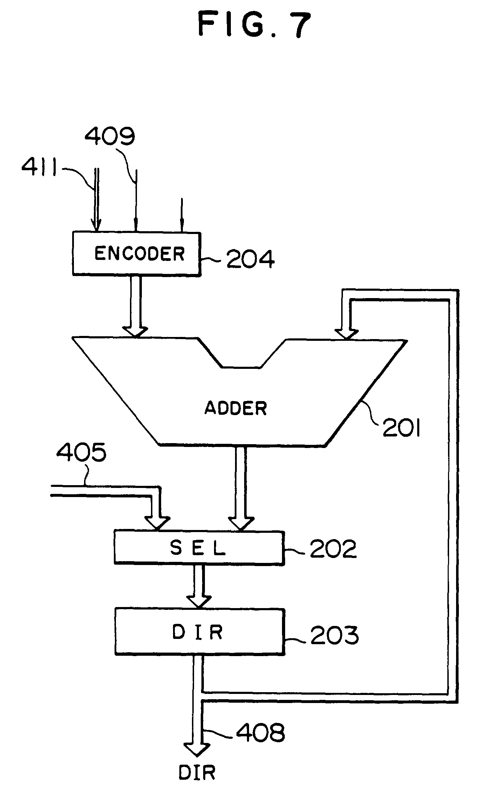

On the other hand, the configuration of the direction code computation section 200 is shown in Fig. 7. The direction code computation section 200 includes an adder 201, a selector (SEL) 202 for selecting either a signal line 405 extending from the system processor 2 or the output of the adder 201, a direction code register DIR 203, and an encoder 204 dor producing the A input data of the adder 201 on the basis of the address computation mode supplied via the signal lines 411.

In the operation of the present circuit, the direction code is computed between the current contour picture element and neighboring picture elements as described with reference to Fig. 3. In the present circuit as well, the addition coefficients are changed depending upon the modes Trace, DIRRD and IMACC. For example, it is now assumed that 4-connectedness are used in Fig. 3 and the direction code of the picture element previously in concern is 4. In the IMACC mode, i.e., in the neighbor search (→), tracking is performed from a picture element ⓧ on the route including picture elements c and d. Therefore, the direction code may be obtained by adding -2 to the current direction code. That is to say, the direction for the picture element ⓧ is 6. In access to the picture element c, therefore, the direction code becomes 6 - 2 = 4. In access to the picture element d, the direction code becomes 4 - 2 = 4. Under the state that the direction code of the picture element previously in concern is O, however, the direction code for the picture element ⓧ is 2. In access to the picture element a, the direction code becomes 2 - 2 = 0. In access to the picture element a, the direction code does not become 0 - 2 = -2. Since a negative value does not exist in the direction codes, complement computation is performed. Since the direction code is 0 to 7 at most, however, the direction code becomes the complement of 2 in this range, i.e., 6. In the Trace mode ( 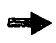 ), the direction code may be obtained by adding 0 to the current direction code. Assuming that the picture element c is the next contour picture element in the foregoing description, the direction code is already 4 in access to the picture element c. Lastly in the DIRRD mode ( 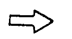 ), the direction code may be obtained by adding 2 to the current direction code. This is in accordance with the known algorithm that search should be performed from the left side of 90° with respect to the traveling direction in case the contour is tracked in the clockwise direction.

In the case of 8-connectedness, the direction code is obtained by adding -1 in the IMACC mode, 0 in the Trace mode, 1 when the current direction code is an even number in the DIRRD mode, and 2 when the current direction code is an odd number in the DIRRD mode.

The case where the contour is tracked in the clockwise direction as shown in Fig. 3 has heretofore been described. The tracking in the counterclockwise direction can also be considered in the same way as the foregoing description, and the coefficients can be easily derived.

It is a matter of course that the present embodiment can be used for binary image. However, the present embodiment can be used for gray level image. That is to say, it is also possible to track a picture element having brightness belonging to some range, a picture element which largely changes in brightness from neighbor picture elements, or the like.

## Claims

1. An image processing method in which computation processing of an address of a picture element is performed in a picture element address computation section, which address is to be accessed by a system processor (100) with respect to a input image stored in an image memory (3), and the transition of the picture element address is coded in a direction code computation section (200);
characterised in that:
a request for neighbor access of a current contour picture element for detecting a next contour picture element, a request for transition from the current contour picture element address to the next contour picture element address, and a request for transition to a start point in said neighbor access are input from the system processor (2);
the coding in the direction code computation section (200) is carried out in parallel to said computation processing performed in said picture element address computation section (100); and
the transition of the picture element address is coded as a direction on a screen.

2. An image processing apparatus comprising:
a picture element address computation section (100) for computing an address of picture element whereto a system processor (2) should gain access with respect to an input image stored in an image memory (3); and
a direction code computation section (200) for coding the transition of a picture element address supplied from said picture element address computation section (100);
characterised in that:
the apparatus further includes a computation control section (300) for controlling said picture element address computation section (100) in accordance with a request for neighbor access of a current contour picture element for detecting a next contour picture element, a request for transition from the current contour picture element address to the next contour picture element address, and a request for transition to a start point in said neighbor access, all of said requests being supplied from said system processor (2);
the direction code computation section (200) is arranged to code the transition as a direction on a screen.

3. An image processing apparatus according to claim 2, wherein said picture element address computation section (100) includes adders (101,102), a first register group (103,108,104,105,109,110) for holding addition constants, and a second register group (106, 111,107,112) for holding addition results, and the addition constants held in said first register group are programmably set.

4. An image processing apparatus according to claim 2, wherein said picture element address computation section (100) comprises adders (101,102), a first register group (103,108,104,105,109,110) for holding additional constants, and a second register group (106,111,107,112) for holding addition results for each of X address generation and Y address generation.

5. An image processing apparatus according to claim 3, wherein the addition constants held in said first register group (103,108) comprise an address of a contour tracking start point.

6. An image processing apparatus according to claim 3, wherein the addition constants held in said first register group (104,105,109,110) comprise direction codes representing displacement components in X and Y directions with respect to a center picture element.

7. An image processing apparatus according to claim 3, wherein the addition results held in said second register group (106,111,107,112) comprise the current contour picture element address.

8. An image processing apparatus according to claim 3, wherein the addition results held in said second register group (106,111,107,112) comprise an address of a picture element neighboring with the current contour picture element.

9. An image processing system including a TV camera (5), an image processing processor (6), an image memory (3), a system processor (2) and an image processing apparatus according to any one of claims 2 to 8.

## Patentansprüche

1. Bildverarbeitungsverfahren, bei dem in einem Bildelementadresse-Berechnungsabschnitt eine Berechnungsverarbeitung für die Adresse eines Bildelements ausgeführt wird, auf die von einem Systemprozessor (100) hinsichtlich eines in einem Bildspeicher (3) abgespeicherten Eingangsbilds zuzugreifen ist, und die Übertragung der Bildelementadresse in einem Richtungscode-Berechnungsabschnitt (200) codiert wird;
**dadurch gekennzeichnet**, daß
- eine Anforderung hinsichtlich eines Nachbarzugriffs für ein aktuelles Konturbildelement zum Erfassen eines nächsten Konturbildelements, eine Anforderung für Übertragung von der aktuellen Konturbildelement-Adresse zur nächsten Konturbildelement-Adresse und eine Anforderung zur Übertragung an einen Startpunkt beim Nachbarschaftszugriff vom Systemprozessor (2) eingegeben werden;
- die Codierung im Richtungscode-Berechnungsabschnitt (200) parallel zur Berechnungsverarbeitung ausgeführt wird, wie sie im Bildelementadresse-Berechnungsabschnitt (100) ausgeführt wird; und
- die Übertragung der Bildelementadresse als Richtung auf einem Schirm codiert wird.

2. Bildverarbeitungsvorrichtung mit:
- einem Bildelementadresse-Berechnungsabschnitt (100) zum Berechnen der Adresse eines Bildelements, auf die ein Systemprozessor (2) hinsichtlich eines in einem Bildspeicher (3) abgespeicherten Eingabebilds Zugriff erlangen sollte; und
- einem Richtungscode-Berechnungsabschnitt (200) zum Codieren der Übertragung einer vom Bildelementadresse-Berechnungsabschnitt (100) gelieferten Bildelementadresse;
**dadurch gekennzeichnet**, daß
- die Vorrichtung ferner einen Berechnungssteuerabschnitt (300) aufweist, zum Steuern des Bildelementadresse-Berechnungsabschnitts (100) entsprechend einer Anforderung für Nachbarschaftszugriff betreffend ein aktuelles Konturbildelement zum Erfassen eines nächsten Konturbildelements, einer Anforderung für eine Übertragung von der aktuellen Konturbildelement-Adresse an die nächste Konturbildelement-Adresse, und einer Anforderung zur Übertragung an einen Startpunkt beim Nachbarschaftszugriff, wobei all diese Anforderungen vom Systemprozessor (2) geliefert werden;
- der Richtungscode-Berechnungsabschnitt (200) so ausgebildet ist, daß er die Übertragung als Richtung auf einem Schirm codiert.

3. Bildverarbeitungsvorrichtung nach Anspruch 2, bei der der Bildelementadresse-Berechnungsabschnitt (100) Addierer (101, 102), eine erste Registergruppe (103, 108, 104, 105, 109, 110) zum Speichern von Additionskonstanten und eine zweite Registergruppe (106, 111, 107, 112) zum Speichern von Additionsergebnissen aufweist, wobei die in der ersten Registergruppe abgespeicherten Additionskonstanten programmierbar einstellbar sind.

4. Bildverarbeitungsvorrichtung nach Anspruch 2, bei der der Bildelementadresse-Berechnungsabschnitt (100) Addierer (101, 102), eine erste Registergruppe (103, 108, 104, 105, 109, 110) zum Speichern von Additionskonstanten und eine zweite Registergruppe (106, 111, 107, 112) zum Speichern von Additionsergebnissen für jeweils die X-Adressenerzeugung und die Y-Adressenerzeugung aufweist.

5. Bildverarbeitungsvorrichtung nach Anspruch 3, bei der die in der ersten Registergruppe (103, 108) abgespeicherten Additionskonstanten die Adresse eines Konturnachfahrstartpunkts umfassen.

6. Bildverarbeitungsvorrichtung nach Anspruch 3, bei der die in der ersten Registergruppe (104, 105, 109, 110) abgespeicherten Additionskonstanten Richtungscodes umfassen, die Versatzkomponenten in der X- und Y-Richtung in bezug auf ein zentrisches Bildelement repräsentieren.

7. Bildverarbeitungsvorrichtung nach Anspruch 3, bei der die in der zweiten Registergruppe (106, 111, 107, 112) abgespeicherten Additionsergebnisse die aktuelle Konturbildelement-Adresse umfassen.

8. Bildverarbeitungsvorrichtung nach Anspruch 3, bei der die in der zweiten Registergruppe (106, 111, 107, 112) abgespeicherten Additionsergebnisse die Adresse eines Bildelements umfassen, das benachbart zum aktuellen Konturbildelement liegt.

9. Bildverarbeitungssystem mit einer Fernsehkamera (5), einem Bildverarbeitungsprozessor (6), einem Bildspeicher (3), einem Systemprozessor (2) und einer Bildverarbeitungsvorrichtung nach einem der Ansprüche 2 bis 8.

## Revendications

1. Procédé de traitement d'image dans lequel un traitement de calcul d'une adresse d'un élément d'image est effectué dans une section de calcul d'adresse d'élément d'image, adresse à laquelle doit accéder un processeur système (100) relativement à une image d'entrée mémorisée dans une mémoire d'image (3), et la transition de l'adresse de l'élément d'image est codée dans une section de calcul de code de direction (200),
caractérisé en ce que :
une demande d'accès voisin d'un élément d'image de contour présent pour détecter un élément d'image de contour suivant, une demande de transition depuis l'adresse de l'élément d'image de contour présent vers l'adresse de l'élément d'image de contour suivant, et une demande de transition vers un point de début dans ledit accès voisin sont entrées à partir du processeur système (2),
le codage dans la section de calcul de code de direction (200) est effectué parallèlement audit traitement de calcul effectué dans ladite section de calcul d'adresse d'élément d'image (100), et
la transition de l'adresse de l'élément d'image est codée en tant que direction sur un écran.

2. Dispositif de traitement d'image comportant :
une section de calcul d'adresse d'élément d'image (100) pour calculer une adresse d'un élément d'image à laquelle doit accéder un processeur système (2) relativement à une image d'entrée mémorisée dans une mémoire d'image (3), et
une section de calcul de code de direction (200) pour coder la transition d'une adresse d'élément d'image envoyée par ladite section de calcul d'adresse d'élément d'image (100),
caractérisé en ce que :
le dispositif comporte en outre une section de commande de calcul (300) pour commander ladite section de calcul d'adresse d'élément d'image (100) conformément à une demande d'accès voisin d'un élément d'image de contour présent pour détecter un élément d'image de contour suivant, une demande de transition depuis l'adresse d'élément d'image de contour présent vers l'adresse d'élément d'image de contour suivant, et une demande de transition vers un point de début dans ledit accès voisin, la totalité desdites demande étant envoyées par ledit processeur système (2),
la section de calcul de code de direction (200) est conçue pour coder la transition en tant que direction sur un écran.

3. Dispositif de traitement d'image selon la revendication 2, dans lequel ladite section de calcul d'adresse d'élément d'image (100) comporte des additionneurs (101, 102), un premier groupe de registres (103, 108, 104, 105, 109, 110) destinés à mémoriser des constantes d'addition, et un second groupe de registres (106, 111, 107, 112) destinés à mémoriser des résultats d'additions, et les constantes d'addition mémorisées dans ledit premier groupe de registres sont établies de manière programmée.

4. Dispositif de traitement d'image selon la revendication 2, dans lequel ladite section des calcul d'adresse d'élément d'image (100) comporte des additionneurs (101, 102), un premier groupe de registres (103, 108, 104, 105, 109, 110) destinés à mémoriser des constantes d'addition, et un second groupe de registres (106, 111, 107, 112) destinés à mémoriser des résultats d'additions pour chaque production d'adresse X et production d'adresse Y.

5. Dispositif de traitement d'image selon la revendication 3, dans lequel les constantes d'addition mémorisées dans ledit premier groupe de registres (103, 108) comporte une adresse d'un point de début de suivi de contour.

6. Dispositif de traitement d'image selon la revendication 3, dans lequel les constantes d'addition mémorisées dans ledit premier groupe de registres (104, 105, 109, 110) comportent des codes de direction représentant des composantes de déplacement dans les directions X et Y par rapport à un élément d'image central.

7. Dispositif de traitement d'image selon la revendication 3, dans lequel les résultats d'addition mémorisés dans ledit second groupe de registres (106, 111, 107, 112) comportent l'adresse de l'élément d'image de contour présent.

8. Dispositif de traitement d'image selon la revendication 3, dans lequel les résultats d'addition mémorisés dans le second groupe de registres (106, 111, 107, 112) comportent une adresse d'un élément d'image voisin de l'élément d'image de contour présent.

9. Système de traitement d'image comportant une caméra TV (5), un processeur de traitement d'image (6), une mémoire d'image (3), un processeur système (2) et un dispositif de traitement d'image selon l'une quelconque des revendications 2 à 8.
